# FASCICULE DE BREVET EUROPEEN

(11) **EP 3 526 368 B1**
(45) Date de publication et mention de la délivrance du brevet: **23.03.2022**
(21) Numéro de dépôt: 17804446.7
(22) Date de dépôt: 17.10.2017
(51) Int. Cl.: C23C 24/04, C23C 24/08

(54) **PROCÉDÉ DE GÉNÉRATION D'UN JET DE NANOPARTICULES**
VORRICHTUNG ZUR ERZEUGUNG EINES STRAHLS VON NANOPARTIKELN
PROCESS FOR GENERATING A JET OF NANOPARTICLES

(30) Priorité: 17.10.2016 FR 1660027
(43) Date de publication de la demande: 21.08.2019
(73) Titulaire: Commissariat à l'Énergie Atomique et aux Énergies Alternatives, 75015 Paris (FR)
(72) Inventeur: SUBLEMONTIER, Olivier, 92260 Fontenay-aux-Roses (FR); ROUSSEAU, Youri, 91470 Limours (FR); MARGUET, Sylvie, 91120 Palaiseau (FR); CARON, Jérôme, 80200 Péronne (FR)
(74) Mandataire: Gevers & Orès
(86) Numéro de dépôt international: PCT/EP2017/076441
(87) Numéro de publication internationale: WO 2018/073226

(56) Documents cités:
- WO-A1-2014/190211
- WO-A2-02/05969
- FR-A1- 2 961 011
- US-A1- 2011 181 958
- TEERA BUTBUREE ET AL: "Step-wise controlled growth of metal@TiO 2 core?shells with plasmonic hot spots and their photocatalytic properties", JOURNAL OF MATERIALS CHEMISTRY A: MATERIALS FOR ENERGY AND SUSTAINABILITY, vol. 2, no. 32, 1 juillet 2014 (2014-07-01), page 12776, XP055383810, GB ISSN: 2050-7488, DOI: 10.1039/C4TA01120A

## Description

L'invention concerne le domaine des dépôts de nanoparticules sur un substrat.

Ces dépôts sont notamment utilisés comme revêtement de pièces massives pour conférer à leur surface des propriétés spécifiques (mécaniques, optiques, chimiques, ...).

Par nanoparticules, on entend des particules, généralement solides, dont la taille est comprise entre 1nm et quelques centaines de nanomètres. Par exemple, la taille des nanoparticules concernées peut être comprise entre 1nm et 200nm.

Il existe différentes techniques pour réaliser un dépôt de nanoparticules sur un substrat.

Généralement, on emploie un jet de nanoparticules sous vide car il s'agit d'un moyen efficace pour produire des dépôts structurés à l'échelle nanométrique (nanostructurés).

Dans ce cadre, une méthode adaptée à la réalisation de ces dépôts consiste en l'aérosolisation d'une suspension liquide contenant les nanoparticules, puis la formation d'un jet de nanoparticules dans un gaz porteur à l'aide d'un système comprenant une chambre de détente et le plus souvent une lentille aérodynamique.

Dans cette méthode, il est essentiel que les nanoparticules en suspension dans le liquide ne s'agglomèrent pas et restent donc dispersées dans le liquide.

En effet, si les nanoparticules s'agglomèrent, la suspension devient instable et précipite rapidement si bien qu'elle ne peut plus être utilisée pour effectuer un dépôt de nanoparticules. De même, même en cas d'agglomération partielle des nanoparticules sans précipitation de la solution, les nanoparticules, dont la taille était préalablement maîtrisée lors de leur synthèse, forment des agglomérats dont la taille n'est plus maitrisée.

Or, les dimensions d'une nanoparticule ou d'un agglomérat de nanoparticules ont un impact direct sur les propriétés physiques, et par exemple les propriétés optiques, du dépôt réalisé sur le substrat. Il existe de nombreuses applications dans lesquelles un matériau nanostructuré présente un intérêt pour contrôler les performances optiques. C'est le cas dans le domaine du photovoltaïque, des diodes électroluminescentes, de la photocatalyse, des biocapteurs, du biomédical et également dans le domaine des revêtements d'intérêt esthétiques.

Aussi, pour assurer le maintien de la dispersion de nanoparticules sous la forme d'une suspension stable de nanoparticules non-agglomérées, on dispose les nanoparticules dans un liquide comprenant un solvant (solvant polaire classique tel que l'eau le plus souvent) et un agent tensioactif, encore nommé surfactant, qui vise à éviter l'agglomération des nanoparticules dans le solvant. Par exemple, dans le cas de nanoparticules d'or, le CTAB

(bromure d'hexadécyltriméthylammonium) ou le citrate est couramment utilisé comme surfactant à cet effet. Les nanoparticules sont enrobées par ces agents organiques qui permettent une dispersion homogène en milieu liquide sans agglomération des particules. Les nanoparticules ainsi enrobées avec le surfactant pour obtenir une suspension stable dans un solvant polaire classique sont appelées « nanoparticules colloïdales ».

Cependant, les molécules organiques de surfactant nécessaires à la stabilité de la suspension sont présentes en grandes quantités dans la suspension liquide.

Au moment de l'aérosolisation, ces molécules sont vaporisées.

Lorsque du citrate est utilisé comme surfactant, certaines de ces molécules de surfactant restent attachées à la surface des nanoparticules et les nanoparticules colloïdales sont ainsi conservées. Mais d'autres de ces molécules de surfactant forment elles-mêmes de nouveaux agrégats de molécules par nucléation. De ce fait, certaines nanoparticules se retrouvent sans surfactant et peuvent ainsi s'agglomérer par les chocs qu'elles subissent entre elles par l'action de la diffusion en phase gazeuse. Il en résulte un jet de nanoparticules dans lequel certaines nanoparticules sont colloïdales (donc non agglomérées) et d'autres non, ces dernières pouvant être soit non agglomérées soit agglomérées, le jet comportant en outre des agrégats de molécules non désirés, issus des molécules de citrate.

Cela n'est pas systématiquement une difficulté, mais souvent.

Lorsque du CTAB est utilisé, la suspension reste stable, même au moment de l'aérosolisation. Cependant, le jet comporte d'autres agrégats de molécules, non désirés, parfois présents en quantités, et qui sont issus des molécules de CTAB.

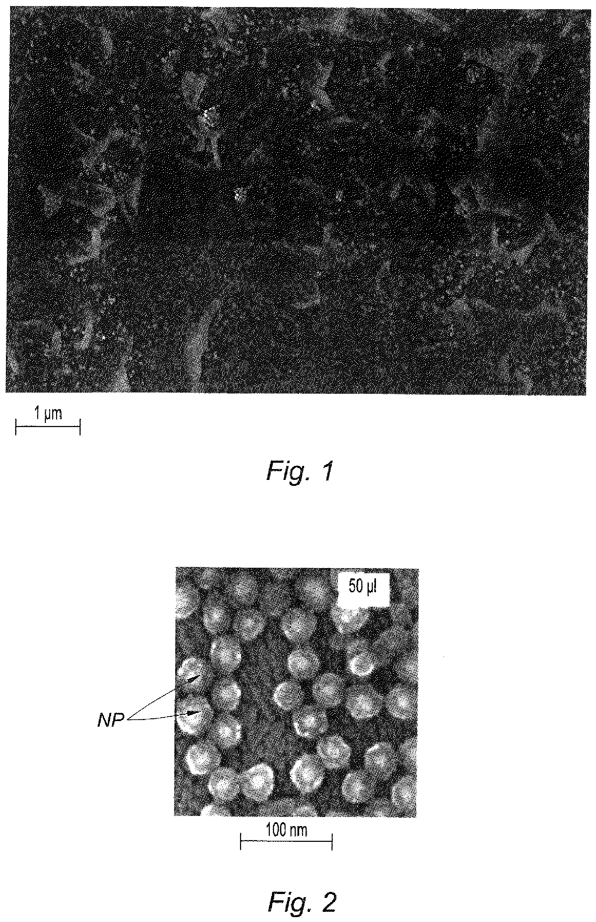

A titre d'exemple, la figure 1 montre un dépôt de nanoparticules sur un substrat réalisé à partir d'une suspension de nanoparticules d'or stabilisée par du CTAB. Ce dépôt, contenant une quantité réduite de nanoparticules d'or (points blancs), parfois agrégées et réparties de façon inhomogène, comporte également de la matière organique indésirable (nappes blanches et grises) formées pendant l'étape d'aérosolisation (atomisation) de la suspension et provenant du CTAB.

Comme pour le citrate, cela n'est pas systématiquement une difficulté, mais souvent.

En effet, cela implique que les propriétés mécaniques et physiques, et en particulier optiques, du dépôt ne sont pas réellement maitrisées.

Des exemples de procédés de dépôt de nanoparticules sont divulgués dans l'art antérieur : FR 2 961 011 A1, WO 2014/192011 A1, WO 02/05969 A2, US 2011/181958 A1 or Butburee et al. (J. Mater.Chem. A, 2014, 2, 12776).

Or, pour de nombreuses applications, les exigences sur la maîtrise des propriétés du dépôt, en particulier des propriétés optiques sont de plus en plus importantes.

Ainsi, un but de l'invention est de proposer un procédé amélioré de dépôt de nanoparticules sur un substrat.

En particulier, un but de l'invention est de proposer un procédé de dépôt de nanoparticules sur un substrat dans lequel le dépôt est autant que possible formé uniquement par des nanoparticules d'intérêt, avantageusement peu ou non agglomérées.

A cet effet, l'invention propose un procédé de dépôt de nanoparticules sur un substrat, comprenant les étapes suivantes :
a) générer un aérosol à partir d'une suspension de nanoparticules dans un liquide ;
b) générer, avec l'aérosol, un jet de nanoparticules dans un gaz porteur, sous vide ;
c) déposer lesdites nanoparticules du jet sur un substrat ;
caractérisé en ce que l'étape a) est mise en œuvre à partir d'une suspension dépourvue de surfactant dans laquelle les nanoparticules comportent un cœur réalisé en un matériau conducteur ou semi-conducteur enrobé par une coquille réalisée en dioxyde de silicium (SiO₂), ladite suspension étant réalisée selon les étapes suivantes :
1) fournir une suspension dans un liquide de nanoparticules stabilisée avec un surfactant, par exemple du citrate ou du CTAB (bromure d'hexadécyltriméthylammonium) ;
2) mettre en contact la suspension ainsi fournie avec du MPTMS (3-(mercaptopropyl)trimethoxysilane) pour obtenir une suspension de nanoparticules enrobées de dioxyde de silicium (SiO₂) et dépourvue de surfactant.

Le procédé selon l'invention pourra comprendre également l'une au moins des caractéristiques suivantes, prises seules ou en combinaison :
- la coquille présente une épaisseur comprise entre 1nm et 100nm, de sorte qu'elle puisse être transparente à une onde électromagnétique dont la longueur d'onde est comprise dans la gamme allant de l'infrarouge à l'ultraviolet ;
- ledit matériau conducteur du cœur des nanoparticules est choisi parmi un métal, un alliage métallique, le carbone ou un mélange de ceux-ci ;
- ledit métal est choisi parmi l'or (Au), l'argent (Ag), l'étain (Sn), le palladium (Pd), l'aluminium (Al), le cuivre (Cu) ou le platine (Pt) ;
- ledit matériau semi-conducteur est choisi parmi le silicium (Si), le germanium (Ge), les arséniures, les nitrures, les phosphures, les antimoniures et les tellurures d'aluminium, d'indium, de gallium et de bore, ainsi que leurs composés ternaires ou quaternaires ;
- l'étape de mise en contact de la suspension avec du MPTMS est réalisée selon les sous-étapes suivantes :
   i) introduire, dans un flacon, une quantité prédéfinie de la solution obtenue à l'issue de l'étape 1) et une quantité nécessaire de soude pour obtenir un pH proche de 10 ;
   ii) chauffer le flacon sous agitation jusqu'à atteindre une température comprise entre 80°C et 90°C ;
   iii) introduire une quantité adéquate de MPTMS, par exemple entre 3 µl et 100 µl, à environ 5% , dans l'éthanol, dans le flacon tout en maintenant une agitation ;
   iv) agiter à température, à savoir toujours entre 80°C et 90°C, pendant plusieurs heures ; et
   v) laver les nanoparticules par centrifugation pour retirer le surfactant résiduel ;
- l'étape c) est réalisée sous un vide correspondant à une pression comprise entre 0,01Pa et 10Pa ;
- ledit procédé comprend en outre, une étape d) consistant à déposer une matrice sur le substrat, par exemple une matrice photosensible ;
- le liquide de la suspension est un solvant polaire, par exemple l'eau ou les alcools en C₁-C₄ et leurs mélanges.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 2 représente des nanoparticules utilisées dans le cadre du procédé de dépôt de nanoparticules sur un substrat faisant l'objet de l'invention ;
- la figure 3 est un schéma représentant un dispositif susceptible d'être employé pour mettre en œuvre un procédé selon l'invention ;
- la figure 4 est un schéma d'un autre dispositif susceptible d'être employé pour mettre en œuvre un procédé selon l'invention.

L'invention propose un procédé de dépôt de nanoparticules sur un substrat comprenant les étapes suivantes :
- générer un aérosol à partir d'une suspension de nanoparticules dans un liquide ;
- générer, avec l'aérosol, un jet de nanoparticules dans un gaz porteur, sous vide ;
- déposer lesdites nanoparticules du jet sur un substrat.

Dans le cadre de l'invention, les nanoparticules comportent un cœur réalisé en un matériau conducteur ou semi-conducteur et une coquille enrobant le cœur, cette coquille étant réalisée avec un matériau non métallique.

La coquille, non métallique, permet d'avoir une suspension stable dans le liquide en empêchant les nanoparticules de s'agglomérer dans la suspension et donc en évitant toute précipitation de la suspension. De ce fait, la coquille non métallique remplit, dans la suspension, la fonction du surfactant utilisé dans l'art antérieur.

La conséquence est qu'il n'est pas utile de prévoir de surfactant dans la suspension.

On peut de ce fait réaliser une aérosolisation dans de bonnes conditions.

Par ailleurs, lors de l'aérosolisation (atomisation), la formation d'agrégats de molécules issus d'un surfactant est également évitée. On évite ainsi de polluer le dépôt avec du surfactant ou des molécules issues de ce surfactant.

De plus, on a pu constater que lors de l'aérosolisation, les nanoparticules en suspension ne s'agglomèrent pas ou peu entre elles et ce, très probablement grâce à la présence de la coquille non métallique.

En conséquence, le dépôt finalement effectué sur le substrat s'effectue avec des nanoparticules nécessairement peu ou non agglomérées, ce qui est intéressant pour l'homogénéité du dépôt, et bien entendu dépourvues de surfactant et de molécules issues de ce surfactant.

Le dépôt finalement réalisé est donc bien contrôlé.

En conséquence, on obtient un substrat SUB, 100 dépourvu de surfactant ainsi que de molécules issues de surfactant et comprenant des nanoparticules formées d'un cœur réalisé en un matériau conducteur ou semi-conducteur enrobé par une coquille réalisée en un matériau non métallique, lesdites nanoparticules étant avantageusement peu ou non agglomérées.

La coquille des nanoparticules est réalisée avec un matériau diélectrique, la silice (SiO₂).

On rappelle qu'un « matériau diélectrique » est un matériau ne possédant pas d'électrons libres capables de transporter un courant électrique (Larousse). En effet, le demandeur considère qu'une coquille diélectrique peut être particulièrement avantageuse pour éviter la formation d'agrégats de nanoparticules dans la suspension.

Parmi les matériaux conducteurs pouvant être utilisés pour former le cœur d'une nanoparticule, on peut envisager un métal, un alliage métallique, du carbone ou un mélange de ceux-ci. En particulier, il peut s'agir d'un matériau métallique tel que l'or (Au), l'argent (Ag), l'étain (Sn), le platine (Pt), l'aluminium (Al), le cuivre (Cu) ou le palladium (Pd).

Parmi les matériaux semi-conducteurs, on peut envisager les arséniures, les nitrures, les phosphures les antimoniures et les tellurures d'aluminium, d'indium, de gallium et de bore, ainsi que leurs composés ternaires ou quaternaires. Parmi les semi-conducteurs, on peut aussi envisager des metalloïdes comme le silicium (Si) ou le germanium (Ge).

En particulier, on peut prévoir des nanoparticules dont le cœur est réalisé en Or (Au) et la coquille en silice (SiO₂). Ceci peut être tout particulièrement envisagé pour les applications esthétiques (luxe), biomédicales, de photocatalyse ou du photovoltaïque.

On peut également prévoir des nanoparticules dont le cœur est en argent (Ag) et la coquille en silice (dioxyde de silicium = SiO₂), notamment pour des applications anti-bactériennes.

Dans le domaine de la photocatalyse, le platine (Pt) peut être employé pour former le cœur des nanoparticules, avec une coquille en silice (SiO₂).

A titre d'exemple, on fournit d'ailleurs ci-après une méthode envisageable pour obtenir des nanoparticules dont le cœur est réalisé en or (Au) et la coquille en silice (SiO₂) :
1) on fournit, de manière classique, une suspension dans un liquide (solvant polaire, par exemple) de nanoparticules d'or stabilisée avec un surfactant, par exemple du citrate ou du CTAB ;
2) on met en contact de la suspension ainsi fournie avec du MPTMS (3-(mercaptopropyl)trimethoxysilane) pour obtenir une suspension de nanoparticules enrobées de silice et dépourvue de surfactant.

L'étape 1) peut être réalisée par toute méthode connue de l'homme du métier.

En particulier, l'étape **1)** peut être réalisée selon la méthode développée par *Turkevich* et décrite par Zhao et al. (Coord. Chem. Rev. 2013, 257, 638-665), dans laquelle le surfactant est un citrate. Cette méthode est particulièrement bien adaptée pour obtenir des nanoparticules sphériques.

En particulier également, cette étape **1)** peut être réalisée selon les méthodes décrites par Homan et al. (http://www.sigmaaldrich.com/technical-documents/articles/materials-science/silica-coated-gold-nanoparticles.html) ou par Moon et al. (Mater. Lett. 2009, 63, 2038-2040), dans lesquelles le surfactant est le CTAB. Dans ce cas, on peut obtenir des nanoparticules avec d'autres formes que les formes sphériques, par exemple des cubes, bâtonnets ou autres.

L'étape **2)** peut être réalisée selon les sous-étapes suivantes :
**i)** Introduction dans un flacon, d'une quantité prédéfinie (par exemple quelques ml, en particulier entre 1ml et 10ml) de la solution obtenue à l'issue de l'étape **1)** (solution mère) et d'une quantité nécessaire de soude pour obtenir un pH proche de 10 ;
**ii)** Chauffage du flacon sous agitation jusqu'à atteindre une température comprise entre 80°C et 90°C ;
**iii)** Introduction d'une quantité adéquate de MPTMS (par exemple entre 3 µl et 100 µl, suivant l'épaisseur d'enrobage souhaitée) à environ 5% (dans l'éthanol) dans le flacon tout en maintenant une agitation ;
**iv)** Agitation à température, à savoir toujours entre 80°C et 90°C, pendant plusieurs heures ; et
**v)** Lavage des nanoparticules par centrifugation pour retirer le surfactant résiduel.

L'étape **2)** permet, notamment lorsqu'elle est mise en œuvre selon les sous-étapes décrites ci-dessus, d'aboutir à une suspension stable de nanoparticules enrobées de silice dans laquelle les nanoparticules sont dépourvues de surfactant. Par nanoparticules « dépourvues de surfactant », par exemple dépourvues de citrate ou de CTAB, il convient de comprendre plus précisément que la concentration de surfactant dans la solution obtenue à l'issue de l'étape 2), correspond au plus à 1% de la concentration de ce surfactant présent dans la suspension fournie à l'étape **1)** (le surfactant étant présent sur les nanoparticules). A titre d'exemple, pour du CTAB, la concentration minimale pour obtenir une suspension stable pendant 1h est de l'ordre de 10⁻⁵ mol.l⁻¹ (étape **1)).** Dans cet exemple, cela signifie qu'à l'issue de l'étape **2),** la concentration de CTAB est au plus de 10⁻⁷ mol.1⁻¹.

Le mode opératoire décrit ci-dessus permet la synthèse d'un volume réduit de suspension de nanoparticules enrobées de silice. Les proportions mentionnées peuvent être homothétiquement augmentées pour obtenir de plus grands volumes de suspension.

C'est au cours de l'étape **2)** qu'on supprime l'essentiel voir la totalité du surfactant (citrate ou CTAB) et qu'on le remplace par du MPTMS qui va permettre de former l'enrobage de silice.

Le surfactant est lié aux nanoparticules par des liaisons de plus faible énergie que celles liant le MPTMS à ces mêmes nanoparticules. Le surfactant est donc labile vis-à-vis du MPTMS et peut donc être remplacé par le MPTMS. Par ailleurs, la température choisie, à savoir entre 80°C et 90°C est un élément activant pour le remplacement du surfactant par le MPTMS, ce qui évite que les nanoparticules d'or ne s'agglomèrent au cours du remplacement.

Par ailleurs, il convient de noter que le MPTMS est un thiol possédant un groupement méthoxysilane qui, après hydrolyse des groupements méthyles, réticule et forme l'enrobage en silice. Les thiols ont en outre l'avantage de cibler les nanoparticules d'or pour former une couche d'accroche à la surface de l'or. Une fois le MPTMS accroché à la surface des nanoparticules d'or, la formation et la croissance de la couche de silice s'effectue par réaction sol-gel.

Comme cela a été indiqué précédemment, la quantité de MPTMS est choisie en fonction de l'épaisseur souhaitée d'enrobage de silice, notamment entre 3µl et 100 µl. Une quantité minimum est en effet souhaitable pour s'assurer que tout le surfactant (citrate ou CTAB) soit remplacé par le MPTMS. En théorie, il n'y a pas de limite supérieure pour l'épaisseur donc pour la quantité de MPTMS, mais une quantité de 100 µl permet d'effectuer des dépôts relativement épais. Afin de se fixer les idées, on peut noter que lors de l'étape **iii**) l'introduction d'une quantité de 50 µl de MPTMS permet de former une coquille en silice de 10nm d'épaisseur autour d'un cœur sphérique de 15nm de diamètre.

La quantité de MPTMS n'est cependant pas le seul paramètre permettant de contrôler l'épaisseur de la couche d'enrobage en silice puisque la température choisie entre 80°C et 90°C permet aussi, pour un volume donné de MPTMS, de contrôler l'épaisseur de l'enrobage. De plus, outre la nature du matériau d'enrobage, la température choisie entre 80°C et 90°C, avec les autres paramètres du mode opératoire permet lors de l'étape 2) d'obtenir un enrobage à la fois fin (quelques nanomètres) et dense.

La figure 2 représente d'ailleurs les nanoparticules NP d'or obtenues après la mise en œuvre du mode opératoire précité, pour des nanoparticules d'or sphériques, de 15nm de diamètre, enrobées dans une coquille de 10nm d'épaisseur. Cette figure est un cliché pris avec un microscope électronique à balayage (MEB).

Il convient de noter que le mode opératoire présenté ci-dessus peut s'étendre à d'autres nanoparticules que celles dont le cœur est en Or (Au). Plus généralement, il est applicable lorsque l'on souhaite enrober, par de la silice (SiO₂), un cœur en matériau conducteur ou semi-conducteur, et notamment un cœur métallique, en alliage métallique, ou réalisé avec un ou plusieurs matériaux semi-conducteurs, du carbone ou un mélange de ceux-ci. En particulier pour un cœur métallique, on peut envisager de l'Argent (Ag), du Cuivre (Cu), du Platine (Pt), du Palladium (Pd) ou du Nickel (Ni). On pourra par exemple se référer à l'article de Vericat & al., « Self-assembled monolayers of thiolates on metals : a review article on sulfur-metal chemistry and surface structures », Royal Society f Chemistry Adv., 2014, vol. 4, pp. 27730-27754.

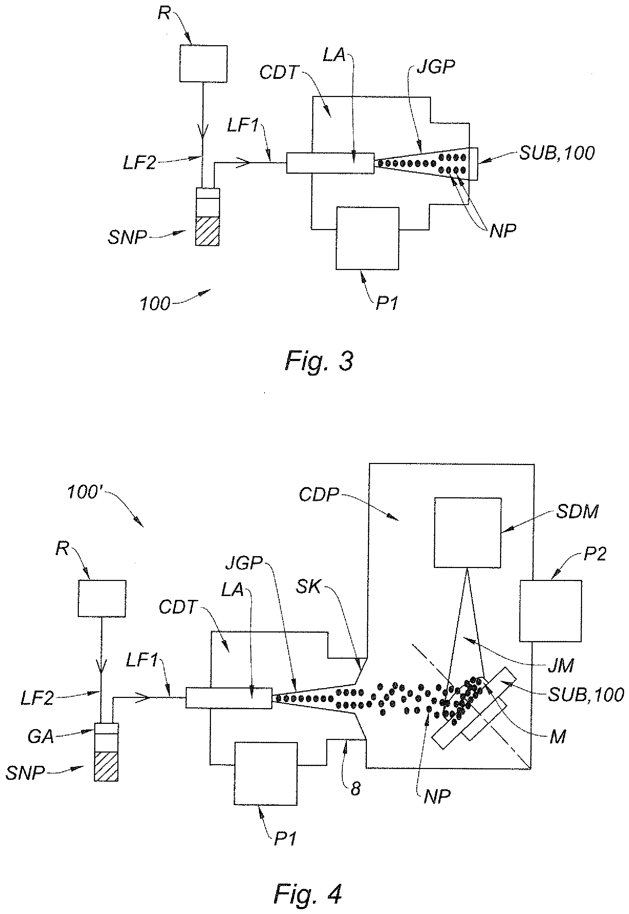

La figure 3 est un schéma d'un dispositif permettant de mettre en œuvre le procédé de dépôt de nanoparticules selon l'invention. Le dispositif 100 comprend un flacon SNP comportant la suspension de nanoparticules comportant un cœur, par exemple métallique, et un enrobage non métallique dans un liquide. Ce flacon est muni à son extrémité d'un générateur d'aérosol GA. La structure d'un générateur d'aérosol est bien connue de l'homme du métier. A titre d'exemple, on peut citer le « Palas AGK 2000 aerosol generator », identifiable à http://www.palas.de/en/product/agk2000. Une liaison fluidique LF1 permet d'acheminer l'aérosol vers l'entrée d'une lentille aérodynamique LA. Il est également prévu un réservoir R de gaz (un gaz ou un mélange de gaz), comportant typiquement un gaz neutre, relié à l'entrée du générateur d'aérosols par une liaison fluidique LF2. La lentille aérodynamique permet de générer le jet JGP de nanoparticules NP dans le gaz porteur, avec l'aide d'une chambre de détente CDT, sous vide, et située en sortie de la lentille aérodynamique LA. Pour mettre la chambre CDT de détente sous vide, on prévoit une pompe à vide P1. Le dépôt est alors effectué sur un substrat SUB. Il convient de noter que la lentille aérodynamique peut être remplacée par une tuyère classique, laquelle permet de générer un jet supersonique de gaz entraînant les nanoparticules.

La figure 4 est un schéma d'un autre dispositif permettant de mettre en œuvre le procédé selon l'invention.

Ce dispositif 100' reprend les mêmes moyens que ceux décrits précédemment pour le dispositif 100 de la figure 3.

Cependant, le substrat SUB sur lequel les nanoparticules NP sont déposées est disposé dans une chambre de dépôt CDP. La chambre de dépôt CDP est fluidiquement connectée à la sortie de la chambre de détente CDT afin que le jet de nanoparticules puisse passer d'une chambre à l'autre et atteindre le substrat SUB. Avantageusement et comme représenté sur la figure 4, un écorceur SK (« skimmer » selon la terminologie anglo-saxonne) est prévu à l'interface entre les deux chambres, CDT, CDP. L'écorceur SK permet de faire passer les nanoparticules N en limitant le passage du gaz porteur.

Le dispositif 100' permet de déposer une matrice autour des nanoparticules.

Pour cela, on prévoit un système SDM de dépôt de la matrice M dans la chambre de dépôt CDP, lequel permet de générer un jet JM (flux d'atomes ou de molécules) de dépôt de la matrice sur le substrat SUB. La chambre de dépôt CDP comporte une pompe P2 qui permet de régler la pression dans la chambre de dépôt.

On peut ainsi obtenir un matériau composite (matrice et nanoparticules) nanostructuré avec les nanoparticules cœur-coquille comportant une coquille non métallique.

Il convient de noter que le dépôt de la matrice M peut s'effectuer en même temps que celui des nanoparticules NP ou séquentiellement, en fonction des besoins, c'est-à-dire de la structuration que l'on souhaite donner au dépôt.

Le plus souvent, afin que le jet de nanoparticules puisse passer de la chambre de détente à la chambre de dépôt, la pression dans la chambre de dépôt est maintenue à une pression inférieure à celle de la chambre de détente.

Toutefois, cette condition sur les pressions respectives dans la chambre de détente et la chambre de dépôt n'est pas obligatoire. A cet égard, on pourra se référer au document FR 2 994 443.

Il convient enfin de noter que le procédé selon l'invention pourrait également, bien que cela présente moins d'intérêt, être mis en œuvre avec le dispositif proposé dans le document FR 2 971 518.

Quel que soit le dispositif utilisé pour mettre en œuvre le procédé selon l'invention, la chambre de détente est maintenue sous vide. Par « sous vide », il convient de comprendre que la pression dans la chambre de détente est comprise entre 0,1Pa et 1 0Pa.

Par ailleurs, quel que soit le dispositif présenté ci-dessus, il est possible de déposer en même temps plusieurs types de nanoparticules en partant d'une suspension contenant l'ensemble des nanoparticules à déposer.

En variante, les dispositifs présentés précédemment peuvent être modifiés pour prévoir plusieurs suspensions, à chacune desquelles sont associés un moyen d'atomisation et un moyen pour générer un jet propre de nanoparticules dans un gaz porteur. En fonctionnement, on peut générer les jets simultanément. On peut aussi générer les jets séquentiellement, en fonction des besoins, c'est-à-dire de la structuration que l'on souhaite donner au dépôt ou faire varier les quantités déposées respectives pendant le dépôt de manière à obtenir des gradients de concentration différents en nanoparticules.

L'absence de surfactant et ses conséquences pour le substrat et l'absence d'agglomération des nanoparticules permet d'obtenir un dépôt non pollué et dont les propriétés sont bien contrôlées.

Ceci est particulièrement avantageux pour de nombreuses applications.

Pour certaines applications, on cherche à améliorer les performances optiques d'une matrice photosensible déposée sur un substrat en s'appuyant sur les avantages procurés par l'effet plasmon.

C'est le cas notamment pour les applications photovoltaïques, la photocatalyse, les diodes électroluminescentes (DEL) ou les biocapteurs.

Pour toutes ces applications, les nanoparticules comportent un cœur, métallique ou semi-conducteur, enrobé par un matériau d'une part diélectrique et d'autre part transparent sur la gamme de longueur d'onde d'intérêt, cette gamme étant liée à l'application considérée.

Le fait que l'enrobage soit diélectrique évite toute transmission de charge électrique de la nanoparticule vers la matrice photosensible.

Le fait que l'enrobage soit transparent dans la gamme de longueur d'onde considérée permet aux ondes électromagnétiques de traverser l'enrobage pour atteindre le cœur d'une nanoparticule afin que ce dernier puisse générer un effet plasmon dans la matrice photosensible. Il convient de noter que de manière générale, à savoir quelle que soit l'application envisagée, la transparence de la coquille pourra être obtenue dans une gamme allant de l'infrarouge à l'ultraviolet, avec une épaisseur de la coquille comprise entre 1nm et 100nm. Pour les épaisseurs les plus importantes, on peut comprendre que le taux de transmission sera plus faible, quelle que soit la nature du matériau formant la coquille. On peut néanmoins obtenir l'effet recherché dans cette gamme d'épaisseur de la coquille, comprise entre 1nm et 100nm.

Pour ces applications, l'effet plasmon est en effet directement lié à l'amélioration des performances optiques de la matrice photosensible. Et pour que cet effet plasmon puisse exister, l'épaisseur de l'enrobage doit être faible, à savoir compris entre 1nm et 2nm. On notera qu'un matériau diélectrique, tel que décrit précédemment, avec une épaisseur aussi faible sera transparent sur les gammes de longueurs d'onde pour les applications visées.

Plus précisément, pour l'application photovoltaïque, la gamme de longueur d'onde d'intérêt va typiquement de l'infrarouge à l'ultraviolet. Les nanoparticules présentent donc un intérêt optique et la matrice photosensible peut être choisie, outre son intérêt optique, pour ses propriétés chimiques et/ou mécaniques.

Dans le domaine des diodes électroluminescentes, on peut faire les mêmes commentaires que pour le photovoltaïque sur les fonctions remplies d'une part par les nanoparticules enrobées (optique) et la matrice (chimique, mécanique), cette dernière étant plus précisément une matrice réalisée dans un matériau photoémissif compte tenu de l'application.

Dans le domaine de la photocatalyse (ex. : dépollution de l'eau ou de l'air, photo-électrolyse de l'eau pour la production d'hydrogène), les contraintes et avantages sont similaires. Toutefois, la gamme de longueur d'onde d'intérêt couvre généralement le visible et l'ultraviolet. L'idée est ici d'inclure des nanoparticules dans ou à la surface d'une matrice photosensible pour en modifier les propriétés photocatalytiques, la matrice photosensible assurant en outre les propriétés mécaniques et/ou chimiques.

Dans le domaine des biocapteurs, l'idée est de pouvoir détecter la présence d'un agent chimique ou biologique en observant une modification des propriétés optiques du matériau nanostructuré avec les nanoparticules. Aussi, toute amélioration de la sensibilité optique du biocapteur est bénéfique.

La matrice photosensible sera obtenue avec un dispositif conforme à celui de a figure 4 (matrice M).

Il faut cependant bien voir que, dans certains cas et pour les applications précitées, qu'une telle matrice photosensible n'est pas obligatoire.

Par exemple, dans une variante ne faisant pas partie de la présente invention, pour l'application photocatalyse, si l'enrobage des nanoparticules est réalisé avec du dioxyde de titane (TiO₂), la présence d'une matrice photosensible obtenu conformément au dispositif de la figure 4 n'est pas nécessaire d'un point de vue fonctionnel, puisque le matériau photosensible (TiO₂) est déjà présent. Dans ce cas, le dépôt simultané d'une matrice poreuse de SiO₂ par exemple, peut être éventuellement réalisée pour des raisons de résistance mécanique et d'adhésion du dépôt sur le substrat, mais ne joue aucun rôle sur l'effet photocatalytique de la couche d'enrobage.

En d'autres termes, dans certains cas, la matrice photosensible est constitué par l'enrobage lui-même du cœur des nanoparticules.

Pour résumer de manière plus générale les quelques applications décrites précédemment (applications photovoltaïques, la photocatalyse, les diodes électroluminescentes (DEL) ou les biocapteurs), on notera que l'invention concerne également une utilisation d'un substrat SUB, 100 conforme à l'invention, à savoir muni de nanoparticules formées d'un cœur réalisé en un matériau conducteur ou semi-conducteur enrobé par une coquille réalisée en un matériau diélectrique et transparent, d'épaisseur comprise entre 1nm et 2nm, substrat sur lequel lesdites nanoparticules sont non agglomérées et dépourvues de surfactant, ladite utilisation étant réalisée pour améliorer les propriétés optiques d'une matrice photosensible.

Dans cette utilisation, la matrice photosensible sera généralement formée par la matrice M obtenue avec un dispositif du type de la figure 4 mais peut, dans une variante ne faisant pas partie de l'invention, dans certains cas, notamment lorsque l'enrobage est formé de dioxyde de titane (TiO₂) être la coquille elle-même.

Pour d'autres applications, on cherche aussi à améliorer ou transformer les performances optiques d'une matrice photosensible, mais en évitant, en outre, la présence d'interférences plasmoniques entre les cœurs des nanoparticules.

Par exemple, dans le domaine du biomédical, on peut avoir un intérêt à réaliser un dépôt de nanoparticules enrobées dans un matériau diélectrique et transparent dans le domaine visible à la surface d'un instrument de chirurgie et ce, afin d'augmenter sensiblement le contraste des images fournies lors d'une opération. Dans ce cas, et contrairement aux applications précitées, il convient que les nanoparticules soient distantes l'une de l'autre pour limiter voire éviter les interférences plasmoniques. Dans ce cas, il convient de prévoir un enrobage en matériau diélectrique et transparent relativement épais, c'est-à-dire dont l'épaisseur est au moins égale à la moitié de la plus grande dimension du cœur. Les nanoparticules représentées sur la figure 2 peuvent donc tout à fait convenir pour cette application.

Pour cette application, une matrice photosensible peut être envisagée, mais cela n'a rien d'obligatoire.

En d'autres termes, dans une variante ne faisant pas partie de la présente invention, un substrat SUB, 100 peut également être utilisé, conforme à l'invention, à savoir muni de nanoparticules formées d'un cœur réalisé en un matériau conducteur ou semi-conducteur enrobé par une coquille réalisée en un matériau diélectrique et transparent, dont l'épaisseur est à la fois comprise entre 1nm et 100nm et au moins égale à la moitié de la plus grande dimension du cœur, substrat sur lequel lesdites nanoparticules sont non agglomérées et dépourvues de surfactant, pour améliorer les propriétés optiques dudit substrat.

Pour encore d'autres applications, on cherche à maîtriser le comportement optique d'une matrice, ce qui implique d'éviter la présence d'interférences plasmoniques entre les cœurs des nanoparticules.

Par exemple, dans le domaine du luxe (cosmétique), on cherche à exploiter, dans le domaine visible, les propriétés optiques des dépôts de nanoparticules à la surface ou dans une matrice transparente. Pour éviter une interférence plasmonique entre deux nanoparticules enrobées avec le matériau diélectrique et transparent et donc maitriser la couleur donnée par les nanoparticules à la matrice transparente, l'épaisseur d'enrobage doit être relativement importante, typiquement au moins égale à la moitié de la plus grande dimension du cœur.

Les nanoparticules représentées sur la figure 2 peuvent donc tout à fait convenir pour cette application.

C'est pourquoi, dans une variante ne faisant pas partie de la présente invention, un substrat SUB, 100 peut également être utilisé, conforme à l'invention, à savoir muni d'une matrice transparente au moins dans le domaine visible et de nanoparticules formées d'un cœur réalisé en un matériau conducteur ou semi-conducteur enrobé par une coquille réalisée en un matériau diélectrique et transparent, dont l'épaisseur est à la fois comprise entre 1nm et 100nm et au moins égale à la moitié de la plus grande dimension du cœur, matrice sur ou dans laquelle les nanoparticules sont non agglomérées et dépourvues de surfactant, pour modifier les propriétés optiques de ladite matrice.

## Revendications

1. Procédé de dépôt de nanoparticules sur un substrat, comprenant les étapes suivantes :
a) générer un aérosol à partir d'une suspension de nanoparticules dans un liquide ;
b) générer, avec l'aérosol, un jet de nanoparticules dans un gaz porteur, sous vide ;
c) déposer lesdites nanoparticules du jet sur un substrat ;
**caractérisé en ce que** l'étape a) est mise en œuvre à partir d'une suspension dépourvue de surfactant dans laquelle les nanoparticules comportent un cœur réalisé en un matériau conducteur ou semi-conducteur enrobé par une coquille réalisée en dioxyde de silicium (SiO₂), ladite suspension étant réalisée selon les étapes suivantes :
1) fournir une suspension dans un liquide de nanoparticules stabilisée avec un surfactant, par exemple du citrate ou du CTAB (bromure d'hexadécyltriméthylammonium) ;
2) mettre en contact la suspension ainsi fournie avec du MPTMS (3-(mercaptopropyl)trimethoxysilane) pour obtenir une suspension de nanoparticules enrobées de dioxyde de silicium (SiO₂) et dépourvue de surfactant.

2. Procédé selon la revendication 1, dans lequel la coquille présente une épaisseur comprise entre 1nm et 100nm, de sorte qu'elle puisse être transparente à une onde électromagnétique dont la longueur d'onde est comprise dans la gamme allant de l'infrarouge à l'ultraviolet.

3. Procédé selon l'une des revendications précédentes, dans lequel ledit matériau conducteur du cœur des nanoparticules est choisi parmi un métal, un alliage métallique, le carbone ou un mélange de ceux-ci.

4. Procédé selon la revendication précédente, dans lequel ledit métal est choisi parmi l'or (Au), l'argent (Ag), l'étain (Sn), le palladium (Pd), l'aluminium (Al), le cuivre (Cu) ou le platine (Pt).

5. Procédé selon l'une des revendications précédentes, dans lequel ledit matériau semi-conducteur est choisi parmi le silicium (Si), le germanium (Ge), les arséniures, les nitrures, les phosphures, les antimoniures et les tellurures d'aluminium, d'indium, de gallium et de bore, ainsi que leurs composés ternaires ou quaternaires.

6. Procédé selon l'une des revendications précédentes, dans lequel l'étape 2) est réalisée selon les sous-étapes suivantes :
i) introduire, dans un flacon, une quantité prédéfinie de la solution obtenue à l'issue de l'étape 1) et une quantité nécessaire de soude pour obtenir un pH proche de 10;
ii) chauffer le flacon sous agitation jusqu'à atteindre une température comprise entre 80°C et 90°C ;
iii) introduire une quantité adéquate de MPTMS, par exemple entre 3 µl et 100 µl, à environ 5% , dans l'éthanol, dans le flacon tout en maintenant une agitation ;
iv) agiter à température, à savoir toujours entre 80°C et 90°C, pendant plusieurs heures ; et
v) laver les nanoparticules par centrifugation pour retirer le surfactant résiduel.

7. Procédé selon l'une des revendications précédentes, dans lequel l'étape c) est réalisée sous un vide correspondant à une pression comprise entre 0,01Pa et 10Pa.

8. Procédé selon l'une des revendications précédentes, comprenant, en outre, une étape d) consistant à déposer une matrice sur le substrat, par exemple une matrice photosensible.

9. Procédé selon l'une des revendications précédentes, dans lequel le liquide de la suspension est un solvant polaire, par exemple l'eau ou les alcools en C₁-C₄ et leurs mélanges.

## Patentansprüche

1. Verfahren zum Aufbringen von Nanopartikeln auf ein Substrat, das die folgenden Schritte umfasst:
a) Erzeugen eines Aerosols aus einer Suspension von Nanopartikeln in einer Flüssigkeit;
b) Erzeugen eines Strahls von Nanopartikeln in einem Trägergas unter Vakuum mit dem Aerosol;
c) Aufbringen der Nanopartikel des Strahls auf ein Substrat;
**dadurch gekennzeichnet, dass** Schritt a) ausgehend von einer Suspension frei von Tensid durchgeführt wird, wobei die Nanopartikel einen Kern aus einem leitenden oder halbleitenden Material aufweisen, der von einer Schale aus Siliziumdioxid (SiO₂) umhüllt ist, wobei die Suspension gemäß den folgenden Schritten hergestellt wird:
1) Bereitstellen einer Suspension in einer Flüssigkeit von Nanopartikeln, die mit einem Tensid z. B. Citrat oder CTAB (Hexadecyltrimethylammoniumbromid) stabilisiert ist;
2) Inkontaktbringen der derart bereitgestellten Suspension mit MPTMS (3-(Mercaptopropyl)trimethoxysilan), um eine Suspension von mit Siliciumdioxid (SiO₂) umhüllten Nanopartikeln zu erhalten, die frei von Tensid ist.

2. Verfahren nach Anspruch 1, wobei die Schale eine Dicke zwischen 1 nm und 100 nm aufweist, so dass sie für eine elektromagnetische Welle mit einer Wellenlänge im Bereich von Infrarot bis Ultraviolett durchlässig sein kann.

3. Verfahren nach einem der vorstehenden Ansprüche, wobei das Leitermaterial des Kerns der Nanopartikel aus einem Metall, einer Metalllegierung, Kohlenstoff oder einem Gemisch davon ausgewählt ist.

4. Verfahren nach dem vorstehenden Anspruch, wobei das Metall ausgewählt ist aus Gold (Au), Silber (Ag), Zinn (Sn), Palladium (Pd), Aluminium (Al), Kupfer (Cu) oder Platin (Pt).

5. Verfahren nach einem der vorstehenden Ansprüche, wobei das Halbleitermaterial aus Silizium (Si), Germanium (Ge), Arseniden, Nitriden, Phosphiden, Antimoniden und Telluriden von Aluminium, Indium, Gallium und Bor sowie deren ternären oder quaternären Verbindungen ausgewählt ist.

6. Verfahren nach einem der vorstehenden Ansprüche, wobei Schritt 2) gemäß den folgenden Teilschritten durchgeführt wird:
i) Einbringen einer vordefinierten Menge der nach Schritt 1) erhaltenen Lösung und einer Menge an Soda, die notwendig ist, um einen pH-Wert nahe 10 zu erhalten, in ein Fläschchen;
ii) Erhitzen des Fläschchens unter Rühren, bis eine Temperatur zwischen 80 °C und 90 °C erreicht ist;
iii) Einbringen einer geeigneten Menge MPTMS, z. B. zwischen 3 µl und 100 µl, zu etwa 5 % in Ethanol, in das Fläschchen unter Aufrechterhaltung des Rührens;
iv) Rühren bei einer Temperatur, d. h. immer zwischen 80 °C und 90 °C, für mehrere Stunden; und
v) Waschen der Nanopartikel durch Zentrifugieren, um das restliche Tensid zu entfernen.

7. Verfahren nach einem der vorstehenden Ansprüche, wobei Schritt c) unter einem Vakuum durchgeführt wird, das einem Druck zwischen 0,01 Pa und 10 Pa entspricht.

8. Verfahren nach einem der vorstehenden Ansprüche, das weiter einen Schritt d) umfasst, der darin besteht, dass eine Matrix, z. B. eine lichtempfindliche Matrix, auf das Substrat aufgebracht wird.

9. Verfahren nach einem der vorstehenden Ansprüche, wobei die Flüssigkeit der Suspension ein polares Lösungsmittel ist, z. B. Wasser oder C₁-C₄-Alkohole und deren Mischungen.

## Claims

1. Process for depositing nanoparticles on a substrate and comprising the following steps:
a) generating an aerosol from a suspension of nanoparticles in a liquid;
b) generating, with the aerosol, a jet of nanoparticles in a carrier gas, under vacuum;
c) depositing said nanoparticles of the jet on a substrate;
**characterised in that** step a) is implemented from a surfactant-free suspension, wherein the nanoparticles comprise a core made of a conductive or semiconductor material coated by a shell made of silicon dioxide (SiO₂), said suspension being produced with the following steps:
1) providing a suspension in a liquid of nanoparticles stabilised with a surfactant, for example citrate or CTAB (hexadecyltrimethylammonium bromide);
2) bringing the suspension thus provided in contact with MPTMS (3-mercaptopropyl)trimethoxysilane) to obtain a suspension of nanoparticles coated with silicon dioxide (SiO₂) and surfactant free.

2. Process according to claim 1, wherein the shell has a thickness of between 1nm and 100nm, such that it can be transparent at an electromagnetic wavelength in the range between infrared and ultraviolet.

3. Process according to one of the preceding claims, wherein said conductive material of the core of the nanoparticles is selected from among a metal, a metal alloy, carbon or a combination thereof.

4. Process according to the preceding claim, wherein said metal is selected from among gold (Au), silver (Ag), tin (Sn), palladium (Pd), aluminium (Al) copper (Cu) or platinum (Pt).

5. Process according to one of the preceding claims, wherein said semiconductor material is selected from among silicon (Si), germanium (Ge), arsenides, nitrides, phosphides, antimonides, and aluminium, indium, gallium and boron tellurides, as well as the ternary and quaternary compounds thereof.

6. Process according to one of the preceding claims, wherein step 2) comprises the following sub-steps:
i) introducing, in a vial, a predefined quantity of the solution obtained from step 1) and a necessary quantity of sodium hydroxide to achieve a pH close to 10;
ii) heating and stirring the vial until it reaches a temperature of between 80°C and 90°C;
iii) introducing an adequate quantity of MPTMS, for example between 3µl and 100µl, at approximately 5%, in ethanol, into the vial while continuing the stirring;
iv) stirring at the temperature, namely still between 80°C and 90°C, for several hours; and
v) washing the nanoparticles by centrifugation to remove the residual surfactant.

7. Process according to one of the preceding claims, wherein step c) is conducted in a vacuum corresponding to a pressure of between 0.01 Pa and 10Pa.

8. Process according to one of the preceding claims, further comprising a step d) consisting of depositing a matrix on the substrate, for example a photosensitive matrix.

9. Process according to one of the preceding claims, wherein the liquid of the suspension is a polar solvent, for example water or C₁-C₄ alcohols and mixtures thereof.
